# EUROPEAN PATENT APPLICATION

(11) **EP 1 596 200 A1**
(43) Date of publication of application: **16.11.2005**
(21) Application number: 04706826.7
(22) Date of filing: 30.01.2004
(51) Int. Cl.: G01N 35/00

(54) **METHOD OF ANALYZING LIQUID SAMPLE AND ANALYTICAL APPARATUS**

(30) Priority: 31.01.2003 JP 2003025045
(71) Applicant: Universal Bio Research Co., Ltd., Matsudo-shi, Chiba 271-0064 (JP)
(72) Inventor: TAJIMA, Hideji, c/o UNIVERSAL BIO RESEARCH CO. LTD, Matsudo-shi, Chiba 2710064 (JP)
(74) Representative: Bohnenberger, Johannes
(86) International application number: PCT/JP2004/000904
(87) International publication number: WO 2004/068144

(57) **Abstract**

With the object of providing an analysis method and analysis apparatus of liquid sample capable of forming a temperature environment in which all reactants can react with their respective specific target substances when a liquid sample is analyzed using a solid support on the surface of which are fixed multiple reactants each of which reacts with a specific target substance at a different reaction temperature, and capable of automating the series of operations from reaction to detection, in the liquid sample analysis method and analyzer of the present invention a liquid sample is analyzed by (a) a step of heating the liquid sample outside a reaction chamber to a temperature higher than any of the reaction temperatures of the reactants, (b) a step of introducing the liquid sample from outside the reaction chamber into the reaction chamber, (c) a step of discharging the liquid sample inside the reaction chamber from the reaction chamber, (d) a step of cooling the liquid sample inside the reaction chamber and/or the liquid sample outside the reaction chamber so that the temperature of the liquid sample passes through any of the reaction temperatures of the reactants, and (e) a step of retaining the liquid sample which has been cooled to each of the reaction temperatures of the reactants within the reaction chamber in order to achieve this object.

## Description

### TECHNICAL FIELD

The present invention relates to an analysis method and analysis apparatus of liquid sample.

### BACKGROUND ART

Solid supports having probes (such as nucleic acids consisting of nucleotide sequences complementary to target nucleic acids or proteins capable of binding to target proteins) fixed thereon are used in detection, identification and the like of target substances (such as nucleic acids or proteins). For example, a target substance is detected, identified or the like by bringing a solid support with a probe fixed thereon into contact with a liquid sample comprising the target substance so that the probe binds with the target substance, and then removing substances other than the target substance by washing or the like. One example of a solid support with a probe fixed thereon is the DNA array (DNA chip) or protein array (protein chip), in which multiple types of probe are arrayed on the surface of a glass slide or other solid support. Such a DNA array or protein array is extremely useful for parallel proteome analysis or analysis of gene expression, mutation, polymorphism and the like.

### DISCLOSURE OF THE INVENTION

The multiple types of probe fixed on a solid support each react with a specific target substance at a different reaction temperature (such as a hybridization temperature). Consequently, when a solid support with multiple types of probe fixed thereon is brought into contact with a liquid sample, a temperature environment in which all probes can react with their respective specific target substances cannot be formed by maintaining the liquid sample temperature at a single temperature. A method of bringing the solid support into contact with the liquid sample in an incubator can be adopted so that the liquid sample temperature can be varied according to the reaction temperature of each probe, but this makes it difficult to automate the series of operations from reaction to detection because it requires an operation of setting the solid support in the incubator and an operation of removing it from the incubator.

It is therefore an object of the present invention to provide an analysis method and analysis apparatus of liquid sample capable of forming a temperature environment in which all reactants can react with their respective specific target substances when a liquid sample is analyzed using a solid support having fixed on the surface thereof multiple reactants (such as nucleic acid probes) each of which reacts with a specific target substance (such as a target nucleic acid) at a different reaction temperature, and capable of automating the series of operations from reaction to detection.

To resolve these issues, the present invention provides an analysis method of liquid sample using a reaction container having a reaction chamber capable of containing a liquid, and a solid support which is contained within the reaction chamber and on the surface of which are fixed multiple reactants each of which reacts with a specific target substance at a different reaction temperature, wherein the analysis method comprises (a) a step of heating the liquid sample outside the reaction chamber to a temperature higher than any of the reaction temperatures of the reactants, (b) a step of introducing the liquid sample outside the reaction chamber into the reaction chamber, (c) a step of discharging the liquid sample inside the reaction chamber from the reaction chamber, (d) a step of cooling the liquid sample inside the reaction chamber and/or the liquid sample outside the reaction chamber so that the temperature of the liquid sample passes through each of the reaction temperatures of the reactants, and (e) a step of retaining the liquid sample which has been cooled to the reaction temperature of each of the reactants within the reaction chamber.

A "liquid sample" is a liquid which contains or may contain one or more target substances, and analysis of a liquid sample may be for example detection of the presence or absence of a target substance, identification of the type of target substance, quantitation of the target substance or the like. When the target substance is a nucleic acid, analysis of a liquid sample includes detection of mutations in the target nucleic acid, analysis of polymorphisms in the target nucleic acid (SNPs analysis), gene expression profile analysis and the like, and for example a liquid sample containing DNA obtained by reverse transcription of mRNA extracted from tissue or cells of a test subject can be used.

A "target substance" is a substance which is the object of detection, identification or the like: there are no particular limits on the type thereof, and it may be either a substance of a known structure, function or the like or an unknown substance. Examples of target substances include nucleic acids, proteins, antigens, antibodies, enzymes, sugars and other biological substances. A nucleic acid may be DNA or RNA or an analog or derivative of these (such as a peptide nucleic acid (PNA), phosphorothioate DNA or the like). There are no particular limits on the nucleotide length of the nucleic acid, which may be either an oligonucleotide or a polynucleotide. The nucleic acid may be in either single-chain or double-chain form, or may be a mixture of both forms.

A "reactant" is a substance which reacts with a specific target substance, and may be a substance of a known structure, function or the like or an unknown substance, but the reaction temperature at which the reactant reacts with the specific target substance must be known. However, the reaction temperature does not necessary need to be known precisely, and it is enough to know the temperature range to which the reaction temperature belongs. The reactivity of the reactant with the target substance may be any kind of reactivity, and examples include covalent binding, ion binding, van der Waals force, hydrogen binding, coordinate linkage, chemical adsorption, physical adsorption and other kinds of binding with the target substance. Examples of combinations of target substance and reactant include nucleic acid/complementary nucleic acid, receptor protein/ligand, enzyme/substrate, antibody/antigen and the like.

Reactants of the same type may be fixed on the surface of the solid support as long as multiple types of reactive substance are also bound thereon. The reactants are preferably fixed on the solid support at positions which correspond to the type of reactant. In this way, the type of a reactant can be distinguished according to position at which the reactant is fixed on the solid support, making it easy to identify the reactant with which a target substance has reacted.

The "reaction temperature" is the temperature or temperature range at which a reactant can react with a specific target substance, and preferably is the temperature (optimal reaction temperature) at which a reactant reacts with a specific target substance most efficiently. The reaction temperature normally differs according to the type of reactant.

A "solid support" is a structure on which a reactant can be fixed one-dimensionally, two-dimensionally or three dimensionally, and there are no particular limits on the form, size or the like thereof as long as it can be contained in the reaction chamber. The material of the solid support is a material which is insoluble in the liquid sample, and can be selected appropriately according to the type of solvent for the liquid sample and the like. Ordinary examples of solid support materials include plastics (such as polyethylene, polypropylene, polyamide, polyvinylidene difluoride and the like), metals (such as iron, gold, silver, copper, aluminum, nickel, cobalt, silicon and the like), glass, ceramics and composite materials of these. The solid support is preferably non-swelling, but may also be swelling. The surface of the solid support may be either porous or non-porous, but more reactive substances can be fixed on the surface of the solid support if it is porous than if it is non-porous.

Examples of solid supports on which reactants can be fixed one-dimensionally include filamentous members, string-like members, bar-shaped members and the like. Examples of solid supports on which reactants can be fixed two-dimensionally include plate-shaped members, sheet-like members and the like. Examples of solid supports on which reactants can be fixed three-dimensionally include helical members consisting of elongated members with plastic properties which have been formed helically, as well as particles and the like. Examples of elongated shapes include filamentous, string, bar, tape and other shapes. When an elongated member consists of a substance which retains its shape such as metal, the elongated member itself can be formed as a helix. When the elongated member itself does not retain its shape, it can be formed in helical shape by winding around an axis member. There are no particular limits on the shape and structure of the axis member as long as it can form the center of a helix, and a bar-shaped member, cylindrical member, circular tube, square column, square tube or the like can be used for the axis. There are no particular limits on the shape, size or the like of the particles, which may be spherical with a diameter of about 10 to 1000 µm for example.

The "surface of the solid support" is the surface which may contact the liquid sample, including not only the exterior (external surface) of the solid support but also any interior (internal surface) of the solid support which may be penetrated by the liquid sample (for example, internal surfaces of pores in the solid support).

The reactant can be fixed to the solid support by a variety of binding modes. Specific examples of binding modes include specific interaction with streptavidin or avidin, hydrophobic interaction, magnetic interaction, polar interaction, formation of covalent bonds (such as amide bonds, disulfide bonds, thioether bonds or the like), crosslinking by means of a crosslinking agent or the like. Known techniques can be used to allow fixing by such binding modes, and the solid support or reactant can be subjected to appropriate chemical modification.

In addition to specific interactions between streptavidin or avidin and biotin, specific interactions between maltose-binding proteins and maltose, between polyhistidine peptides and nickel, cobalt or other metal ions, between glutathione-S-transferase and glutathione, between calmodulin and calmodulin-binding peptides, between ATP-binding proteins and ATP, between nucleic acids and complement nucleic acids, between receptor proteins and ligands, between enzymes and substrates, between antibodies and antigens and between IgG and protein A and the like can be used to fix a reactant to a solid support.

The binding mode of the solid support and the reactant is preferably one that does not allow the solid support and reactant to be easily separated. Examples of such binding modes include interactions between avidin or streptavidin and biotin, formation of covalent bonds, crosslinking with a crosslinking agent and the like.

When using interactions between avidin or streptavidin and biotin, for example a reactant with introduced biotin (for example, a biotinylated nucleic acid obtained by PCR using a primer biotinylated at the 5' terminal) can be bound to a solid support coated with avidin or streptavidin.

When using formation of covalent bonds, covalent bonds can be formed using functional groups present in the reactant or on the surface of the solid support. Specific examples of functional groups capable of forming covalent bonds include carboxyl, amino and hydroxyl groups and the like. For example, if carboxyl groups are present on the surface of the solid support they can first be activated by a carbodiimide such as 1-ethyl-3-(3-dimethylaminopropyl)-3-ethylcarbodiimide hydrochloride (EDC) or the like, and reacted with amino groups of the reactant to amide bind the solid support to the reactant. Alternatively, if amino groups are present on the surface of the solid support they can be replaced with carboxyl groups using a cyclic acid anhydride such as anhydrous succinic acid or the like, and then reacted with amino groups of the reactant to amide bind the solid support to the reactant. If the reactant is a nucleic acid, the nucleic acid is preferably bound to the solid support via a linker sequence introduced at the 5' or 3' terminal so as not to detract from the reactivity (ability to hybridize with complementary nucleic acid) of the nucleic acid.

In the case of crosslinking using a crosslinking agent, a variety of crosslinking agents capable of reacting with functional groups of the object of crosslinking can be used. Specific examples of crosslinking agents include bifunctional reagents, trifunctional reagents and other multifunctional reagents. Specific examples of such multifunctional reagents include N-succinimidyl(4-iodoacetyl)aminobenzoate (SIAB), dimaleimide, dithio-bis-nitrobenzoic acid (DTNB), N-succinimidyl-S-acetylthioacetate (SATA), N-succinimidyl-3-(2-pyridyldithio)propionate (SPDP), succinimidyl 4-(N-maleimidomethyl)cyclohexane-1-carboxylate (SMCC), 6-hydrazinonicotimide (HYNIC) and the like.

There are no particular limits on the structure of the reaction container as long as it has a reaction chamber, but preferably it should have a liquid inlet/outlet communicating with the reaction chamber (see Claim 9). In this way, various liquids including liquid samples, washing liquid and the like can be easily introduced into the reaction chamber and discharged from the reaction chamber via the liquid inlet/outlet. There may be one liquid inlet/outlet or two or more.

The reaction container preferably comprises a suction/discharge device capable of suctioning liquids from the reaction chamber via the liquid inlet/outlet and discharging liquid from the reaction chamber via the liquid inlet/outlet (see Claim 9). In this way it is possible to automate intake into the reaction chamber and discharge from the reaction chamber of various liquids including liquid samples, washing liquid and the like. In this case, a tip which mounts detachably on a nozzle part of the suction/discharge device can be used as the reaction container (see Claim 10).

The reaction container is preferably composed of an optically transparent material (see Claim 12). When the reaction container is made of an optically transparent material, light emitted from a target substance that has reacted with a reactant (such as fluorescence or chemoluminescence) can be detected outside the reaction container, allowing the target substance to be detected, identified or the like while the solid support is still contained in the reaction chamber. There are no particular limits on the type of optically transparent material, which can be any transparent or semitransparent material having the strength required for the reaction container. Specific examples of optically transparent materials include plastics, glass and the like. The reaction chamber is preferably composed of thin plates. This makes it easy to set the light emission conditions and light reception conditions for exposing the reaction chamber to light and detecting light emitted from within the reaction chamber.

A "reaction chamber" is a space in which a reaction takes place between a reactant and a target substance. There are no particular limits on the shape, size and the like of the reaction chamber as long as it can contain a liquid sample and a solid support. There are no particular limits on the number of reaction chambers, which may be 1 or 2 or more.

### Step (a)

Step (a) is a step of heating the liquid sample outside the reaction chamber to a temperature higher than any of the reaction temperatures of the reactants. Step (a) is the first step in the liquid sample analysis method of the present invention.

There are no particular limits on the temperature to which the liquid sample is heated as long as it is higher than any of the reaction temperatures of the reactants, nor are there any particular limits on the method of heating the liquid sample. The liquid sample can be heated for example using a heater or the like. The liquid sample does not need to be heated to a temperature only slightly higher than the highest reaction temperature, but can be heated to a temperature somewhat (for example 0.5 to 5°C) higher than the highest reaction temperature. The liquid sample can also be heated to roughly the same temperature as the highest reaction temperature. Care is needed because excessive heating can cause damage to target substances contained in the liquid sample. Even if the highest reaction temperature is not known accurately the sample can be heated to a temperature above the upper limit of the temperature range to which the highest reaction temperature belongs.

Because the liquid sample is heated outside the reaction chamber, the reaction container does not need to be placed in an incubator. Consequently, an operation of removing the reaction container from the incubator after the reaction is not required, and detection can be performed as is after the reaction. Moreover, since a heating device does not need to be installed in the reaction container, detection from outside the reaction chamber of whether a reaction has occurred between a reactant and a target substance will not be impeded by a heating device installed in the reaction chamber.

### Step (b)

Step (b) is a step of introducing the liquid sample outside the reaction chamber into the reaction chamber. Step (b) is performed at least after step (a), but may then be performed again subsequently. That is, multiple steps (b) may be included in the liquid sample analysis method of the present invention.

The liquid sample to be introduced into the reaction chamber is a liquid sample outside the reaction chamber, and may be for example a liquid sample which has been heated outside the reaction chamber to a temperature higher than any of the reaction temperatures of the reactants, or a liquid sample which has been first discharged from the reaction chamber into a sample cooling container and then cooled in the liquid sample cooling container. The liquid sample can be introduced into the reaction chamber using a suction/discharge device mounted on the reaction container for example.

The reaction container is preferably first heated to a temperature higher than any of the reaction temperatures of the reactants before the sample liquid which was heated in step (a) is introduced into the reaction chamber (see Claim 2). This prevents the temperature of the liquid sample from falling below the highest reaction temperature when the heated liquid sample is introduced into the reaction chamber. The reaction container can be heated for example by introducing a reaction container heating liquid which has been heated to a temperature higher than any of the reaction temperatures of the reactants into the reaction chamber, holding it in the reaction chamber and then discharging it from the reaction chamber (see Claim 3). Consequently, it is also unnecessary in this case to either install a heating device in the reaction chamber or place the reaction container in an incubator. There are no particular limits on the composition of the reaction container heating liquid as long as it does not corrode the reaction container. The reaction container heating liquid is retained inside the reaction chamber until the reaction chamber is at a temperature higher than any of the reaction temperatures of the reactants.

### Step (c)

Step (c) is a step of discharging the liquid sample inside the reaction chamber from the reaction chamber. Step (c) is performed at least after step (b), but may also be performed again thereafter. That is, multiple steps (c) may be included in the liquid sample analysis method of the present invention.

The liquid sample to be discharged from the reaction chamber is a liquid inside the reaction chamber, and may be for example a liquid sample which has been introduced into the reaction chamber after having been heated outside the reaction chamber to a temperature higher than any of the reaction temperatures of the reactants, or a liquid sample which has been introduced into the reaction chamber from a liquid sample cooling container after having been cooled in the liquid sample cooling container. The liquid sample can be discharged from the reaction chamber using a suction/discharge device mounted on the reaction container for example.

### Step (d)

Step (d) is a step of cooling the liquid sample inside the reaction chamber and/or the liquid sample outside the reaction chamber so that the temperature of the liquid sample passes through each of the reaction temperatures of the reactants.

The liquid sample to be cooled is a liquid sample inside the reaction chamber and/or a liquid sample outside the reaction chamber. A liquid sample inside the reaction chamber may be for example a liquid sample which has been introduced into the reaction chamber after having been heated outside the reaction chamber to a temperature higher than any of the reaction temperatures of the reactants, or a liquid sample which has been introduced into the reaction chamber from a liquid sample cooling container after having been cooled in the liquid sample cooling container. A liquid sample outside the reaction chamber may be a liquid sample which has been discharged from the reaction chamber into a liquid sample cooling container or the like.

The liquid sample may be cooled either only inside the reaction chamber or only outside the reaction chamber or both inside and outside the reaction chamber. For example, a liquid sample which has cooled inside the reaction chamber can be discharged from the reaction chamber into a liquid sample cooling container and cooled in the liquid sample cooling container, or a liquid sample which has cooled in a liquid sample cooling container can be introduced from the liquid sample cooling container into the reaction chamber and cooled in the reaction chamber. There are no particular limits on the shape, structure and the like of the "liquid sample cooling container" here as long as it is capable of containing the liquid sample and cooling the contained liquid sample. Liquid sample cooling containers which can be used include for example containers having a Peltier element or other cooling element mounted via an aluminum, copper, iron or other thermally conductive metal block.

When part of the liquid sample is in the reaction chamber while the remainder is outside the reaction chamber (for example, when part of the liquid sample inside the reaction chamber has been discharged into a liquid sample cooling container or when part of the liquid sample inside the liquid sample cooling chamber has been introduced into the reaction chamber), either the liquid sample inside the reaction chamber or the liquid sample outside the reaction chamber may be cooled, or both may be cooled.

As long as the temperature of the liquid sample passes through each of the reaction temperatures of the reactants, the liquid sample may be cooled either in such a way that the temperature of the liquid sample falls gradually or in such a way that the temperature of the liquid sample falls by a process of repeated rising and falling. In other words, as long as the temperature of the liquid sample ultimately falls it does not matter if the temperature of the liquid sample rises at some point in the process of cooling the liquid sample.

The liquid sample inside the reaction chamber can be cooled for example by releasing the heat of the liquid sample inside the reaction chamber into the air outside the reaction container (see Claim 4). At this time, the cooling speed of the liquid sample inside the reaction chamber can be adjusted by controlling the temperature of the air outside the reaction container.

Alternatively, the cooling speed of the liquid sample inside the reaction chamber can be adjusted by bringing the reaction container into contact with a temperature-controlled gas or thermally-conductive metal block while heat from the liquid sample inside the reaction chamber is released into the air outside the reaction container. In this case, the cooling speed of the liquid sample inside the reaction chamber can be adjusted without being totally dependent on the temperature of the air outside the reaction container. Contact between the reaction container and a temperature-controlled gas can be achieved for example by inserting the reaction container into an indentation in a cooled, thermally-conductive metal block, and retaining the reaction container within the internal space of the indentation. Contact between the reaction container and a temperature-controlled thermally-conductive metal block can be achieved for example by inserting the reaction container into an indentation in a cooled thermally-conductive metal block, and bringing the reaction container into contact with the inner walls of the indentation.

The cooling speed of the liquid sample inside the reaction chamber can also be adjusted by heating the reaction container when the heat of the liquid sample inside the reaction chamber is released into the air outside the reaction container (see Claim 5). In this way adjustment of the cooling speed of the liquid sample inside the reaction chamber is not simply dependent on the temperature of the air outside the reaction container, and the temperature of the liquid sample can be maintained at the desired temperature. There are no particular limits on the heating system for the reaction container, and examples include heating with a heating element (such as an iron-chrome-aluminum metal heater or nickel-chrome metal heating element or a carbon silicon, molybdenum silicide or other non-metal heating element or the like), dielectric heating, microwave heating, radiant heating (infrared heating) and the like, but radiant heating (infrared heating) is preferred (see Claim 6). Radiant heating can be performed using a known radiant heating device (focused radiant heater, lamp heater). During radiant heating the reaction container can be rotated to vary the surface which is exposed to light (infrared light) emitted by the radiant heater so that the entire reaction container is heated. When a tip which mounts detachably on a nozzle part of a suction/discharge device is used as the reaction container (see Claim 10), the reaction container can be rotated by rotating the nozzle.

The liquid sample outside the reaction chamber can be cooled for example within a liquid sample cooling container (see Claim 7). By cooling the liquid sample outside the reaction chamber it is possible to cool the liquid sample separately from the reaction container, making it unnecessary to either cool the reaction container itself or place the reaction container in a incubator. In this case, the cooling speed of the liquid sample in the liquid sample cooling container can be adjusted by controlling the temperature of the liquid sample cooling container.

By successively repeating the steps of discharging the liquid sample from the reaction chamber into the liquid sample cooling container, cooling of the liquid sample in the liquid sample cooling container and introduction of the liquid sample from the liquid sample cooling container into the reaction chamber (see Claim 8), it is possible to adjust the cooling time in the reaction chamber and the cooling time in the liquid sample cooling container so that the liquid sample is cooled at the desired cooling speed. Moreover, the temperature of the liquid sample can be rapidly homogenized by repeated introduction and discharge of the liquid sample. In addition, the reaction efficiency of the reactant and the target substance is improved because the liquid sample is agitated as it is repeatedly introduced and discharge.

### Step (e)

Step (e) is a step of retaining the liquid sample which has been cooled to the reaction temperatures of each of the reactants within the reaction chamber.

The liquid sample can be held in the reaction chamber once it has been cooled to the respective reaction temperatures of the reactants, and may be either inside or outside the reaction chamber when it is at other temperatures. For example, when a liquid sample is cooled in the reaction chamber and reaches a certain reaction temperature, it can be held as is in the reaction chamber, while when a liquid sample is cooled outside the reaction chamber and reaches a certain reaction temperature the liquid sample can be introduced into the reaction chamber and held in the reaction chamber. Liquid sample which has been cooled to the respective reaction temperatures of the reactants is held in the reaction chamber for the time which it takes for the reactants to react with specific target substances.

By holding the liquid sample which has been cooled to the respective reaction temperatures of the reactants in the reaction chamber it is possible to form a temperature environment in which all reactants can react with their respective specific target substances, improving the accuracy of detection, identification and the like of target substances.

Following step (d) the liquid sample analysis method of the present invention may include a step (f) in which the presence or absence of a reaction between a reactant and a target substance is detected from outside the reaction container with the solid support still contained within the reaction chamber (see Claim 11). The series of operations from reaction of reactant and target substance to detection and identification of the target substance can be automated if the presence or absence of a reaction between the reactant and the target substance is detected from outside the reaction container.

The presence or absence of a reaction between a reactant and a target substance can be easily detected if the target substance has been bound to a labeling substance. Examples of labeling substances include fluorescent dyes (such as marine blue, cascade blue, cascade yellow, fluorescein, rhodamine, phycoerythrin, CyChrome, PerCP, Texas red, allophycocyanin and PharRed as well as Cy2, Cy3, Cy3.5, Cy5, Cy7 and other Cy dyes, Alexa-488, Alexa-532, Alexa-546, Alexa-633, Alexa-680 and other Alexa dyes and Bodipy FL, BodipyTR- and other Bodipy dyes) and other fluorescent substances, radioactive isotopes (such as ³H, ¹⁴C, ³²P, ³³P, ³⁵S and ¹²⁵I) and other radioactive substances and the like. The target substance is preferably fluorescently labeled with a fluorescent substance (see Claim 12).

Labeling with a fluorescent dye can be accomplished for example by first reacting a target substance already having introduced amino groups with a fluorescent dye having an active ester, or by reacting a target substance already having introduced carboxyl or amino groups with a fluorescent dye having functional groups (such as amino groups) capable of a binding reaction with carboxyl groups or with a fluorescent dye having functional groups (such as carboxyl groups) capable of a binding reaction with amino groups in the presence of a carbodiimide such as 1-ethyl-3-(3-dimethylaminopropyl)-3-ethylcarbodiimide hydrochloride (EDC).

When the reaction container is composed of an optically transparent material and the target substance is fluorescently labeled, fluorescence emitted by a target substance which has reacted with a reactant can be detected outside the reaction container (see Claim 12).

When detecting the presence or absence of the reaction of a reactant with a target substance, target substance remaining in the reaction chamber without reacting with the reactant is preferably removed by washing the inside of the reaction chamber with a washing liquid after the liquid sample has been discharged from the reaction chamber.

To resolve the aforementioned issues, the present invention provides an analysis apparatus of liquid sample comprising a reaction container having a reaction chamber capable of containing liquids and a liquid inlet/outlet communicating with the reaction chamber, a solid support which is contained within the reaction chamber and on the surface of which are fixed multiple reactants each of which reacts with a specific target substance at a different reaction temperature, a suction/discharge part capable of suctioning a liquid into the reaction chamber via the liquid inlet/outlet and discharging a liquid from the reaction chamber via the liquid inlet/outlet, a liquid container capable of containing a liquid, and a heating and cooling part capable of heating and cooling a liquid contained in the liquid container, wherein the analyzer comprises an executing part capable of executing (g) a step of heating a liquid sample contained in the liquid container to a temperature higher than any of the reaction temperatures of the reactants by means of the heating and cooling part, (h) a step of suctioning a liquid sample contained in the liquid container into the reaction chamber via the liquid inlet/outlet by means of the suction/discharge part, (i) a step of discharging the liquid sample held in the reaction chamber into the liquid container via the liquid inlet/outlet by means of the suction/discharge part, (j) a step of subjecting the liquid sample held in the reaction chamber to a first cooling by releasing heat from the liquid sample into the air outside the reaction container, (k) a step of subjecting the liquid sample contained in the liquid container to a second cooling by means of the heating and cooling part, (1) a step of performing the first cooling and/or second cooling so that the temperature of the liquid sample passes through each of the reaction temperatures of the reactants, and (m) a step of holding in the reaction chamber the liquid sample which has been cooled to the respective reaction temperatures of the reactants.

The liquid sample analyzer of the present invention is an apparatus capable of implementing the liquid sample analysis method of the present invention, and step (g) which is executed by the liquid sample analyzer of the present invention corresponds to step (a) of the liquid sample analysis method of the present invention, while step (h) corresponds to step (b), step (i) corresponds to step (c), steps (j), (k) and (1) correspond to step (d) and step (m) corresponds to step (e).

In the liquid sample analyzer of the present invention the aforementioned executing part preferably performs steps (j), (i), (k) and (h) repeatedly in sequence (see Claim 14). In this way, the cooling time inside the reaction chamber and the cooling time inside the liquid cooling container can be controlled and the liquid sample can be cooled at the desired cooling speed. Moreover, the temperature of the liquid sample can be rapidly homogenized by repeatedly introducing and discharging the liquid sample. In addition, the reaction efficiency of the reactants with the target substances can be increased because the liquid sample is agitated as it is repeatedly introduced and discharged.

The liquid sample analyzer of the present invention may include a temperature control part for controlling the temperature of the air outside the reaction container. The liquid sample inside the reaction chamber can be cooled at the desired cooling speed by controlling the temperature of the air outside the reaction container. The cooling speed of the liquid sample contained in the liquid container can be adjusted by means of the heating and cooling part.

The liquid sample analyzer of the present invention has a heating part for heating the reaction container, and in step (j) the reaction container is preferably heated to adjust the cooling speed of the liquid sample while the heat of the liquid sample is released into the air outside the reaction container (see Claim 15). In this way adjustment of the cooling speed of the liquid sample in the reaction chamber is not simply dependent on the temperature outside the reaction container, and the temperature of the liquid sample can be maintained at the desired temperature. There are no particular limits on the system for heating the reaction container by means of the heating part, but radiant heating is preferred (see Claim 16). When the heating system for the reaction container is radiant heating, the heating part may be configured similarly to a known radiant heater (focused radiant heater, lamp heater) which is equipped with a lamp (light source) for emitting infrared rays (such as near-infrared rays) and a reflecting mirror for reflecting the light emitted by the lamp and concentrating it on a focal point. The light source may be a halogen lamp, xenon lamp or the like for example, and the reflecting mirror may be a concave mirror or the like and may be provided with a metal plating layer to improve the reflection efficiency of the infrared rays.

The liquid sample analyzer of the present invention is preferably equipped with a light source for providing excitation light to the reaction chamber and a fluorescence detector for detecting fluorescent light emitted from the reaction chamber (see Claim 17). It is thus possible to detect the presence or absence of a reaction between a reactant and a target substance from outside the reaction chamber with the solid support still contained in the reaction chamber.

### BRIEF DESCRIPTION OF THE DRAWINGS

Figure 1 is a partial cross-section showing one embodiment of the liquid sample analyzer of the present invention.
Figure 2 shows an oblique view of a solid support which is part of a liquid sample analyzer according to the same embodiment.
Figure 3 is a flow chart showing the operations of a liquid sample analyzer according to the same embodiment.
Figure 4 is a flow chart (continuation of Figure 3) showing the operations of a liquid sample analyzer according to the same embodiment.

### BEST MODE FOR CARRYING OUT THE INVENTION

Embodiments of the present invention are explained below based on drawings.

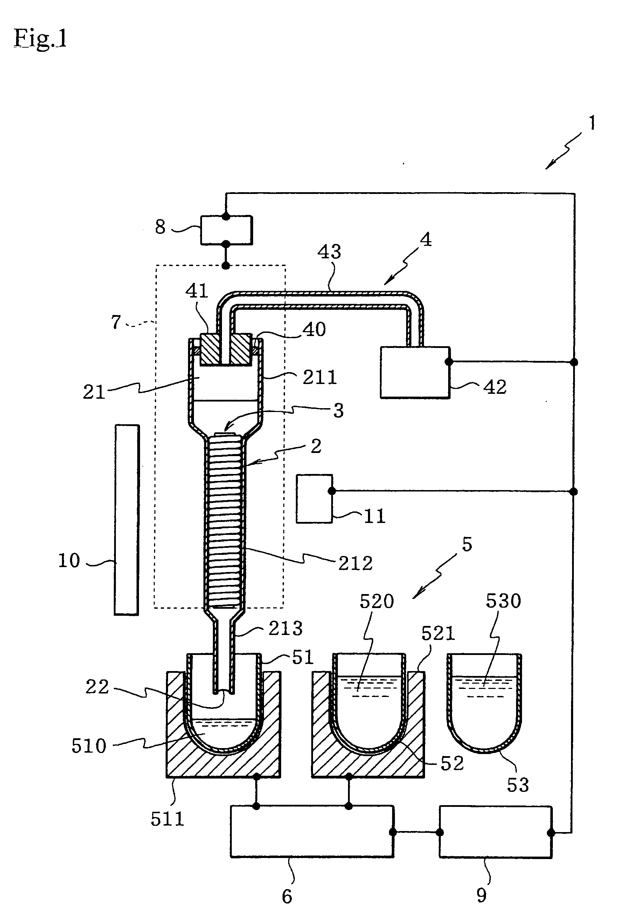

Figure 1 is a partial cross-section showing one embodiment of the liquid sample analyzer of the present invention.

As shown in Figure 1, liquid sample analyzer 1 comprises reaction container 2 having reaction chamber 21 and liquid inlet/outlet 22 communicating with reaction chamber 21, solid support 3 contained in reaction chamber 21, suction/discharge part 4 which suctions liquid into reaction chamber 21 via liquid inlet/outlet 22 and discharges liquid from reaction chamber 21 via liquid inlet/outlet 22, liquid container 5, heating and cooling part 6 which heats and cools liquid contained in liquid container 5, holder 7 which holds reaction container 2, drive 8 which moves holder 7 up and down and right and left, radiant heater 11 which heats reaction container 2 by exposing reaction container 2 to infrared rays, controller 9 which controls the operations of suction/discharge part 4, heating and cooling part 6, drive 8 and radiant heater 11, and detector 10, which directs excitation light at reaction chamber 21 and receives fluorescence from reaction chamber 21.

As shown in Figure 1, reaction container 2 is composed of cylinders 211, 212 and 213 each with a different diameter, with the lower end of cylinder 211 being continuous with the upper end of cylinder 212 and the lower end of cylinder 212 being continuous with the lower end of cylinder 213. Cylinder 211 has the largest diameter and cylinder 213 the smallest. Reaction chamber 21 is formed inside reaction container 2, and reaction chamber 21 contains liquid. Liquid inlet/outlet 22 which communicates with reaction chamber 21 is formed at the lower end of cylinder 213 so that liquid can be introduced into reaction chamber 21 via liquid inlet/outlet 22 and discharged from reaction chamber 21 via liquid inlet/outlet 22. Reaction container 2 is made of an optically transparent material so that reaction chamber 21 can be exposed to light from outside reaction container 2 and so that light emitted from inside reaction chamber 21 can be received outside reaction container 2. Reaction container 2 is composed of flat plates so as to facilitate setting the conditions for exposing the interior of reaction chamber 21 to light and detecting light emitted from inside reaction chamber 21. A temperature sensor is mounted in reaction container 2 so that the temperature of liquid contained in reaction chamber 21 can be measured.

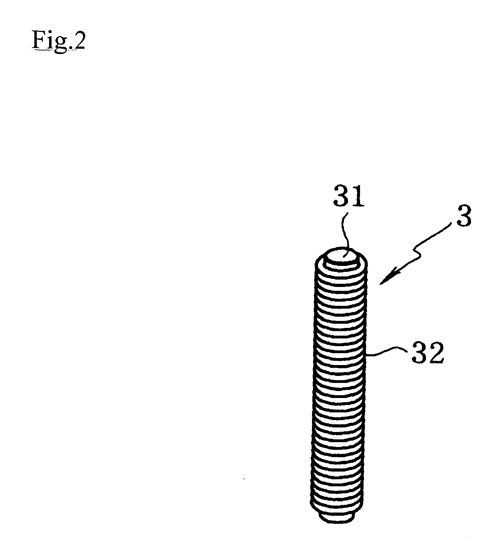

As shown in Figures 1 and 2, solid support 3 is provided with cylindrical axis member 31 and string-like member 32 which is wound around axis member 31. Multiple different reactants R₁, R₂, R₃...Rₙ (where n is any natural number) are fixed on the surface of string-like member 32. The positions at which the reactants are fixed on the solid support correspond to the types of reactant, so that the type of a reactant fixed at a position on the solid support can be distinguished based on that position. String member 32 is formed as a helix by being wound around axis member 31. Reactants R₁ through Rₙ are arranged three-dimensionally in reaction chamber 21 by being fixed on the surface of string member 32, which is formed as a helix. Reactants R₁ through Rₙ each react with a specific target substance at a different reaction temperature. The respective reaction temperatures of R₁, R₂, R₃...Rₙ are T₁, T₂, T₃...Tₙ, with the temperatures descending gradually from the highest (temperature T₁ of reactant R₁) through T₂, T₃ etc. to the lowest (reaction temperature Tₙ of reactant Rₙ).

As shown in Figure 1, suction/discharge part 4 has nozzle 41, which is mounted via O-ring 40 on the upper opening of cylinder 211 of reaction container 21, and pump 42, which communicates with nozzle 41 via pipe 34. By decreasing or increasing the pressure in reaction chamber 21, suction/discharge part 4 can suction liquid into reaction chamber 21 via liquid inlet/outlet 22 or discharge liquid from reaction chamber 21 via liquid inlet/outlet 22. Suction/discharge part 4 has a motor or other drive mechanism which rotates nozzle 41 so that nozzle 41 can be rotated. In this way, reaction container 2 mounted on nozzle 41 can be rotated along with the rotation of nozzle 41.

As shown in Figure 1, liquid container 5 has container 51 for containing reaction container heating liquid 510, container 52 for containing liquid sample 520 and container 53 for containing washing liquid 530. Heating and cooling part 6 is mounted on containers 51 and 52 via their respective thermally-conductive metal blocks 511 and 521. Heating and cooling part 6 has a heater, Peltier element or other heating and cooling device, so that liquid contained in containers 51 and 52 can be heated or cooled to a desired temperature. Containers 51 and 52 of liquid container 5 having temperature sensors so that the temperature of liquid contained in containers 51 and 52 can be measured.

Drive 8 has a motor or other drive mechanism for moving holder 7 up and down and a motor or other drive mechanism for moving holder 7 right and left, so that holder 7 can be moved up and down and right and left. Reaction container 2, which is held in holder 7, can be moved up and down and right and left along with the movement of holder 7.

Radiant heater 11 is equipped with a lamp (light source) which emits infrared rays (such as near-infrared rays) and a reflecting mirror for reflecting the light emitted by the lamp and focusing it on a focal point, so that reaction container 2 can be heated by exposure to infrared rays. The light source is a halogen lamp, xenon lamp or the like for example, the reflecting mirror is a convex mirror or the like for example, and the reflecting mirror is provided with a metal plating layer to improve the reflection efficiency of the infrared rays.

As shown in Figure 1, controller 9 is connected to pump 42 of suction/discharge part 4, heating and cooling part 6, drive 8 and radiant heater 11 so as to control the operations of these. By this means, liquid sample analyzer 1 can execute a step of operating heating and cooling part 6 to heat reaction container heating liquid 510 contained in container 51 of liquid container 5 to a temperature greater than any of the reaction temperatures of reactants R₁ through Rₙ; a step of operating suction/discharge part 4 and drive 8 to suction reaction container heating liquid 510, liquid sample 520 or washing liquid 530 contained in container 51, 52 or 53 of liquid container 5 into reaction chamber 21 via liquid inlet/outlet 22; a step of operating suction/discharge part 4 and drive 8 to discharge reaction container heating liquid 510, liquid sample 520 or washing liquid 530 held in reaction chamber 21 from reaction chamber 21 via liquid inlet/outlet 22; a step of subjecting liquid sample 520 to a first cooling by releasing heat from liquid sample 520 held in reaction chamber 21 into the air outside reaction container 2; a step of adjusting the cooling temperature of liquid sample 520 by heating operating radiant heater 11 to heat reaction container 2 while releasing heat from liquid sample 520 into the air outside reaction container 2; a step of subjecting liquid sample 520 held in container 52 of liquid container 5 to a second cooling by operating heating and cooling part 6; a step of performing the first cooling and/or a second cooling so that the temperature of liquid sample 520 passes through each of the reaction temperatures of reactants R₁ through Rₙ; and a step of holding liquid sample 520 which has been cooled to each of the reaction temperatures of reactants R₁ through Rₙ inside reaction chamber 21.

The temperature of the air outside reaction chamber 2 and the temperature of container 52 of liquid container 5 are adjusted so that the speed of the second cooling is faster than the speed of the first cooling. Because liquid sample analyzer 1 lacks a temperature controller for adjusting the temperature of the air outside reaction container 2, the air outside reaction container 2 is at room temperature.

Detector 10 has multiple optical fibers connected to a light source for providing excitation light and a light-receiving element, and excitation light can be provided to reaction chamber 21 or fluorescence emitted from inside reaction chamber 21 can be received via the multiple optical fibers. The tips of the multiple optical fibers are arranged in a line connecting to a support member, while the other ends of the optical fibers are connected to a line sensor or CCD element. Detector 10 can scan up and down or can be rotated to scan 360 degrees around the periphery of reaction container 2, allowing excitation light to be provided to and fluorescence to be detected from all of reaction chamber 21.

Since liquid sample 520 contained in container 52 of liquid container 5 contains target substances with fluorescent labels, the presence or absence of reactions with target substances can be detected for all of reactants R₁ through Rₙ by providing excitation light to and detecting fluorescence from all of reaction chamber 21. Moreover, because the position at which a reactant is fixed on the solid support corresponds to the type of reactant, the type of a target substance can be identified by distinguishing the position on the solid support of the reactant which reacts with the target substance.

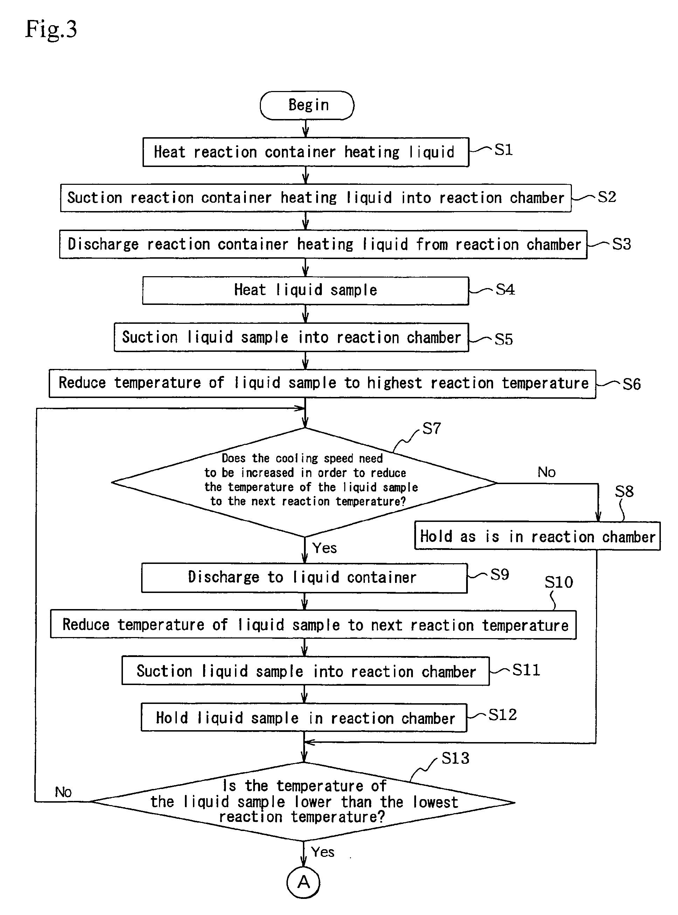

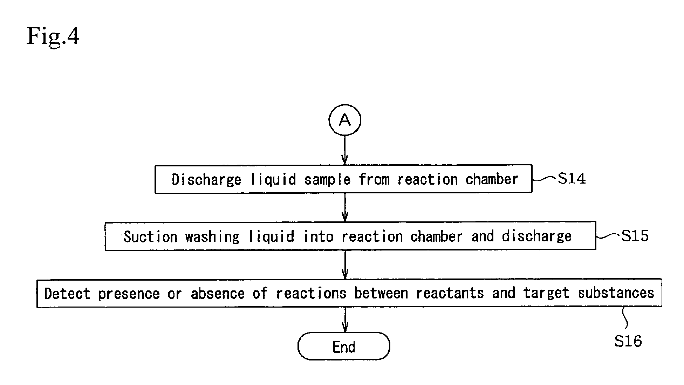

The operations of liquid sample analyzer 1 are explained based on the flow charts shown in Figures 3 and 4.

First, liquid sample analyzer 1 executes step S1 of operating heating and cooling part 6 to heat reaction container heating liquid 510 contained in container 51 of liquid container 5 to a temperature greater than any of the reaction temperatures of reactants R₁ through Rₙ. Reaction container heating liquid 510 is heated for example to a temperature 0.5 to 5°C higher than the highest reaction temperature T₁ of all the reaction temperatures T₁ through Tₙ of reactants R₁ through Rₙ.

Next, liquid sample analyzer 1 executes step S2 of operating suction/discharge part 4 and drive 8 to suction reaction container heating liquid 510 contained in container 51 of liquid container 5 into reaction chamber 21 via liquid inlet/outlet 22. Drive 8 inserts liquid inlet/outlet 22 into container 51, and suction/discharge part 4 suctions reaction container heating liquid 510 from container 51 via liquid inlet/outlet 22. Reaction container heating liquid 510 which has been suctioned into reaction chamber 21 is held for a specified time in reaction chamber 21. The holding time is the time required for reaction container 2 to be heated to a temperature higher than any of the reaction temperatures of reactants R₁ through Rₙ, and is normally 1 to 2 minutes.

Next, liquid sample analyzer 1 executes step S3 of operating suction/discharge part 4 to discharge reaction container heating liquid 510 held in reaction chamber 21 from reaction chamber 21 via liquid inlet/outlet 22. Reaction container heating liquid 510 is discharged into container 51 of liquid container 5.

Next, liquid sample analyzer 1 executes step S4 of operating heating and cooling part 6 to heat liquid sample 520 contained in container 52 of liquid container 5 to a temperature higher than any of the reaction temperatures of reactants R₁ through Rₙ. Liquid sample 520 is heated for example to a temperature 0.5 to 5°C higher than reaction temperature T₁.

Next, liquid sample analyzer 1 executes step S5 of operating suction/discharge part 4 and drive 8 to suction liquid sample 520 contained in container 52 of liquid container 5 into reaction chamber 21 via liquid inlet/outlet 22. Drive 8 inserts liquid inlet/outlet 22 into container 52 and suction/discharge part 4 suctions liquid sample 520 from container 52 via liquid inlet/outlet 22. Liquid sample 520 which has been suctioned into reaction chamber 21 is held as is in reaction chamber 21.

Next, liquid sample analyzer 1 executes step S6 of releasing heat from liquid sample 520 held in reaction chamber 21 into the air outside reaction container 2 to lower the temperature of liquid sample 520 to reaction temperature T₁. Once liquid sample 520 has been cooled to reaction temperature T₁, the conditions are fulfilled for reactant R₁ to react with a specific target substance. When heat from liquid sample 520 is being discharged outside reaction container 2, liquid sample analyzer 1 operates radiant heater 11 to heat reaction container 2 and adjust the cooling speed of liquid sample 520. Thus, adjustment of the cooling speed of liquid sample 520 held in reaction chamber 21 is not solely dependent on the temperature of the air outside reaction container 2, and the temperature of liquid sample 520 can be maintained at the desired temperature (reaction temperature T₁). While operating radiant heater 11 to heat reaction container 2, liquid sample analyzer 1 rotates nozzle 41 to rotate reaction container 2, thus varying the surface which is exposed to light (infrared light) emitted by radiant heater 11 so that all of reaction container 2 is heated.

Next, liquid sample analyzer 1 executes a step S7 of determining whether or not it is necessary to raise the cooling speed of liquid sample 520 in order to cool liquid sample 520 to the reaction temperature Tₖ₊₁ which is next highest after reaction temperature Tₖ (k = 1, 2, 3,..., n-1). The necessity for raising the cooling speed of liquid sample 520 is determined based on the temperature difference between reaction temperature Tₖ and reaction temperature Tₖ₊₁. If the temperature difference between reaction temperature Tₖ and reaction temperature Tₖ₊₁ is large (such as 3°C or more), it is judged that the cooling speed of liquid sample 520 needs to be increased because it will take too long for liquid sample 520 to cool as is in reaction chamber 21. If the temperature difference between reaction temperature Tₖ and reaction temperature Tₖ₊₁ is small (such as less than 3°C), it is judged that the cooling speed of liquid sample 520 does not need to be increased because it will not take too long for liquid sample 520 to cool as is in reaction chamber 21.

When it is judged that the cooling speed of liquid sample 520 does not need to be increased, liquid sample analyzer 1 executes a step S8 of holding liquid sample 520 as is in reaction chamber 21. Once heat from liquid sample 520 held in reaction chamber 21 has been released outside reaction chamber 2 and liquid sample 520 has cooled to reaction temperature Tₖ₊₁, the conditions are met for reactant Rₖ₊₁ to react with a specific target substance. While heat from liquid sample 520 is being discharged outside reaction container 2, liquid sample analyzer 1 operates radiant heater 11 to heat reaction container 2 and adjust the cooling speed of liquid sample 520. Thus adjustment of the cooling speed of liquid sample 520 held in reaction chamber 21 is not solely dependent on the temperature of the air outside reaction container 2, and liquid sample 520 can be maintained at the desired temperature (reaction temperature Tₖ₊₁). While operating radiant heater 11 to heat reaction container 2, liquid sample analyzer 1 rotates nozzle 41 to rotate reaction container 2, thus varying the surface which is exposed to light (infrared rays) emitted by radiant heater 11 so that all of reaction container 2 is heated. After executing step S8, liquid sample analyzer 1 executes the step 13 described below.

Once it is judged that there is a need to increase the cooling speed of liquid sample 520, liquid sample analyzer 1 executes step S9 of operating suction/discharge part 4 to discharge liquid sample 520 held in reaction chamber 21 to container 52 of liquid container 5 via liquid inlet/outlet 22.

Next, liquid sample analyzer 1 executes step S10 of operating heating and cooling part 6 to cool the liquid sample 520 contained in container 52 of liquid container 5, lowering the temperature of liquid sample 520 to reaction temperature Tₖ₊₁. Heating and cooling part 6 cools liquid sample 520 contained in container 52 of liquid container part 5 at a specific cooling speed.

Next, liquid sample analyzer 1 executes step S11 of operating suction/discharge part 4 to suction liquid sample 520 contained in container 52 of liquid container 5 into reaction chamber 21 via liquid inlet/outlet 22.

Next, liquid sample analyzer 1 executes step S12 of holding liquid sample 520 in reaction chamber 21. Holding sample 520 which has been cooled to reaction temperature Tₖ₊₁ creates the conditions for reactant Rₖ₊₁ to react with a specific target substance. At this time, liquid sample analyzer 1 operates radiant heater 11 to heat reaction container 2 and maintain liquid sample 520 at the desired temperature (reaction temperature Tₖ₊₁). While operating radiant heater 11 to heat reaction container 2, liquid sample analyzer 1 rotates nozzle 41 to rotate reaction container 2, varying the surface that is exposed to light (infrared light) emitted by radiant heater 11 so that all of reaction container 2 is heated.

Next, liquid sample analyzer 1 executes step S13 of judging whether the temperature of liquid sample 520 held in reaction chamber 21 is lower than the lowest reaction temperature Tₙ of reaction temperatures T₁ through Tₙ. If the temperature of liquid sample 520 is judged not to be lower than Tₙ, the aforementioned step S7 is performed again.

Once the temperature of liquid sample 520 is judged to be lower than Tₙ, the conditions have been created for all of reactants R₁ through Rₙ to react with specific target substances, so liquid sample analyzer 1 executes step S14 of operating suction/discharge part 4 to discharge liquid sample 520 from reaction chamber 21 to container 52 of liquid container 5.

Next, liquid sample analyzer 1 executes step S15 of operating suction/discharge part 4 and drive 8 to suction washing liquid 530 contained in container 53 of liquid container 5 into reaction chamber 21 via liquid inlet/outlet 22 and discharging it from reaction chamber 21 into container 53 of liquid container 5. Drive 8 inserts liquid inlet/outlet 22 into container 53, and suction/discharge part 4 suctions the washing liquid 530 in container 53 and discharges it via liquid inlet/outlet 22. Suctioning and discharge of washing liquid 530 may be repeated as necessary. Target substances which have remained in reaction chamber 21 without reacting with reactants R₁ through Rₙ are removed when washing liquid 530 is discharged from reaction chamber 21.

Next, liquid sample analyzer 1 executes step S16 of operating detector 10 to detect the presence or absence of reactions between reactants R₁ through Rₙ and target substances. Detector 10 directs excitation light at the interior of reaction chamber 21 and detects fluorescence emitted from within reaction chamber 21 (that is, fluorescence emitted by target substances which have reacted with any of reactants R₁ through Rₙ). By identifying the position from which the fluorescence was emitted and identifying the type of reactant fixed at that position it can identify the type of target substance which has reacted with the reactant.

Liquid sample analyzer 1 can also perform operations other than those described above. For example, after executing steps 1 through S5, liquid sample analyzer 1 can repeatedly execute a step of cooling liquid sample 520 by releasing heat from liquid sample 520 held in reaction chamber 21 into the air outside reaction container 2, a step of operating suction/discharge part 4 to discharge liquid sample 520 held in reaction chamber 21 into container 52 of liquid container 5 via liquid inlet/outlet 22, a step of operating heating and cooling part 6 to cool liquid sample 520 contained in container 52 of liquid container 5, and a step of operating suction/discharge part 4 to suction liquid sample 520 contained in container 52 of liquid container 5 to reaction chamber 21 via liquid inlet/outlet 22, in that order. After repeating these steps until the temperature of liquid sample 520 is lower than the lowest temperature Tₙ of reaction temperatures T₁ through Tₙ, liquid sample analyzer 1 can execute steps S14 through S16 in sequence. By suctioning and discharging sample liquid 520 at specific intervals, liquid sample analyzer 1 can adjust the cooling time in reaction chamber 21 and the cooling time in container 52 so that liquid sample 520 is cooled at the desired cooling speed. Also, liquid sample analyzer 1 can repeatedly suction and discharge liquid sample 520 so that uniformed temperature of liquid sample 520 can be obtained rapidly. Moreover, liquid sample analyzer 1 can repeatedly suction and discharge liquid sample 520 so that liquid sample 520 is agitated, thus improving the reaction efficiency of the reactants with the target substances.

### INDUSTRIAL APPLICABILITY

A liquid sample analysis method and analyzer are provided capable of forming a temperature environment in which all reactants can react with their respective specific target substances when a liquid sample is analyzed using a solid support on the surface of which are fixed multiple reactants (such as nucleic acid probes) each of which reacts with a specific substance (such as a target nucleic acid) at a different reaction temperature, and capable of automating the series of operations from reaction to detection.

## Claims

1. An analysis method of liquid sample using a reaction container having a reaction chamber capable of containing a liquid, and a solid support which is contained within the reaction chamber and on the surface of which are fixed multiple reactants each of which reacts with a specific target substance at a different reaction temperature, wherein
the analysis method comprises (a) a step of heating the liquid sample outside the reaction chamber to a temperature higher than any of the reaction temperatures of the reactants, (b) a step of introducing the liquid sample outside the reaction chamber into the reaction chamber, (c) a step of discharging the liquid sample inside the reaction chamber from the reaction chamber, (d) a step of cooling the liquid sample inside the reaction chamber and/or the liquid sample outside the reaction chamber so that the temperature of the liquid sample passes through each of the reaction temperatures of the reactants, and (e) a step of retaining the liquid sample which has been cooled to the reaction temperature of each of the reactants within the reaction chamber.

2. An analysis method according to Claim 1, wherein the reaction container is heated to a temperature higher than any of the reaction temperatures of the reactants before the liquid sample which has been heated in the step (a) is introduced into the reaction chamber.

3. An analysis method according to Claim 2, wherein the reaction container is heated by introducing a reaction container heating liquid which has been heated to a temperature higher than any of the reaction temperatures of the reactants into the reaction chamber, holding the liquid in the reaction chamber and discharging the liquid from the reaction chamber.

4. An analysis method according to any of Claims 1 through 3, wherein in the step (d) the liquid sample is cooled by releasing the heat of the liquid sample inside the reaction chamber into the air outside the reaction container.

5. An analysis method according to Claim 4, wherein, when the heat of the liquid sample is released into the air outside the reaction container, the reaction container is heated to adjust the cooling speed of the liquid sample.

6. An analysis method according to Claim 5, wherein the reaction container is radiantly heated.

7. An analysis method according to any of Claims 1 through 6, wherein in the step (c) the liquid sample inside the reaction chamber is discharged from the reaction chamber into a liquid sample cooling container, and in the step (d) the liquid sample is cooled in the liquid sample cooling container, and in the step (b) the liquid sample in the liquid sample cooling container is introduced from the liquid sample cooling container into the reaction chamber.

8. An analysis method according to Claim 7, wherein discharge of the liquid sample from the reaction chamber into the liquid sample cooling container, cooling of the liquid sample in the liquid sample cooling container and introduction of the liquid sample from the liquid sample cooling container into the reaction chamber are repeated in sequence.

9. An analysis method according to any of Claims 1 through 8, wherein
the reaction container has a liquid inlet/outlet communicating with the reaction chamber,
a suction/discharge device capable of suctioning liquids into the reaction chamber via the liquid inlet/outlet and discharging liquids from the reaction chamber via the liquid inlet/outlet is mounted on the reaction container, and
the sample liquid is introduced into the reaction chamber and discharged from the reaction chamber using the suction/discharge device.

10. An analysis method according to Claim 9, wherein the reaction container is a tip which mounts detachably on a nozzle part of the suction/discharge device.

11. An analysis method according to any of Claims 1 through 10, further comprising a step (f) of detecting from outside the reaction container the presence or absence of reactions between the reactants and the target substances while the solid support is still contained in the reaction chamber.

12. An analysis method according to Claim 11, wherein
the reaction container is composed of an optically transparent material,
the target substances are fluorescently labeled, and
fluorescence emitted by the target substances which have reacted with the reactants is detected from outside the reaction container.

13. An analysis apparatus of liquid sample comprising
a reaction container having a reaction chamber capable of containing liquids and a liquid inlet/outlet communicating with the reaction chamber,
a solid support which is contained within the reaction chamber and on the surface of which are fixed multiple reactants each of which reacts with a specific target substance at a different reaction temperature,
a suction/discharge part capable of suctioning a liquid into the reaction chamber via the liquid inlet/outlet and discharging a liquid from the reaction chamber via the liquid inlet/outlet,
a liquid container capable of containing a liquid, and
a heating and cooling part capable of heating and cooling a liquid contained in the liquid container, wherein
the analyzer comprises an executing part capable of executing (g) a step of heating a liquid sample contained in the liquid container to a temperature higher than any of the reaction temperatures of the reactants by means of the heating and cooling part, (h) a step of suctioning a liquid sample contained in the liquid container into the reaction chamber via the liquid inlet/outlet by means of the suction/discharge part, (i) a step of discharging the liquid sample held in the reaction chamber into the liquid container via the liquid inlet/outlet by means of the suction/discharge part, (j) a step of subjecting the liquid sample held in the reaction chamber to a first cooling by releasing heat from the liquid sample into the air outside the reaction container, (k) a step of subjecting the liquid sample contained in the liquid container to a second cooling by means of the heating and cooling part, (1) a step of performing the first cooling and/or second cooling so that the temperature of the liquid sample passes through each of the reaction temperatures of the reactants, and (m) a step of holding in the reaction chamber the liquid sample which has been cooled to the respective reaction temperatures of the reactants.

14. An analyzer according to Claim 13, wherein the executing part repeatedly performs the steps (j), (i), (k) and (h) in sequence.

15. An analyzer according to Claim 13 or 14, comprising a heating part for heating the reaction container, wherein in the step (j) the reaction container is heated to adjust the cooling speed of the liquid sample while the heat of the liquid sample is released into the air outside the reaction container.

16. An analyzer according to Claim 15, wherein the heating part radiantly heats the reaction container.

17. An analyzer according to any of Claims 13 through 16, comprising a light source which exposes the reaction chamber to excitation light, and a fluorescence detector which detects fluorescence emitted from the reaction chamber.
